# EUROPÄISCHE PATENTSCHRIFT

(11) **EP 0 455 854 B1**
(45) Veröffentlichungstag und Bekanntmachung des Hinweises auf die Patenterteilung: **20.04.1994**
(21) Anmeldenummer: 90108742.9
(22) Anmeldetag: 09.05.1990
(51) Int. Cl.: A61C 13/00

(54) **Rohlingkörper zur Herstellung eines Zahnrestaurations-Passkörpers**
Blank for the manufacture of a dental prosthesis
Ebauche pour la fabrication de prothèses dentaires

(43) Veröffentlichungstag der Anmeldung: 13.11.1991
(73) Patentinhaber: SIEMENS AKTIENGESELLSCHAFT, 80333 München (DE)
(72) Erfinder: Pfeiffer, Joachim, Dr. rer. nat., D-6140 Bensheim (DE); Weber, Walter, Ing.-grad., D-6140 Bensheim 3 (DE)

(56) Entgegenhaltungen:
- EP-A- 0 160 797
- DE-U- 9 000 174
- FR-A- 2 567 017

## Beschreibung

Die Erfindung betrifft einen Rohlingkörper zur Herstellung eines Zahnrestaurations-Paßkörpers, insbesondere einer Krone, mit einem ersten Abschnitt zur materialabtragenden Bearbeitung des Paßkörpers und einem zweiten Abschnitt zur Halterung des Rohlingkörpers in einer Bearbeitungsmaschine.

Ein Rohlingkörper dieser Gattung ist in der EP-Al-0 160 797 beschrieben. Der dort als Halter dienende zweite Abschnitt ist zum Einsetzen in eine Spannzange einer Bearbeitungsmaschine für die materialabtragende Bearbeitung vorgesehen und gewährleistet in Verbindung mit dort vorhandenen Referenzflächen, daß sich stets eine vorbestimmte Ausgangslage für den Rohlingkörper einstellen läßt. Mittels erster Referenzflächen, die vornehmlich Referenzanschläge bilden, kann der Halterungsababschnitt maßgerecht in der Bearbeitungsmaschine positioniert werden. Um Abnutzungen des Bearbeitungswerkzeuges zu berücksichtigen, sind weitere Referenzflächen vorgesehen, welche jeweils die Ausgangslage des Werkzeuges vor der Bearbeitung festlegen.

Mit einem solchen Rohlingskörper lassen sich zwar Inlays und Onlays problemlos fertigen; die Paßkörper müssen jedoch nach dem Einpassen am Patienten nachbearbeitet werden, insbesondere ist ein Nachpolieren der Oberfläche des Paßkörpers erforderlich.

Ziel der vorliegenden Erfindung ist es, einen Rohlingkörper zu schaffen, aus dem sich auch kompliziertere Paßkörper, wie Kronen, mit weniger Arbeitsaufwand, insbesondere unter Vermeidung eines Nachpolierens im Patientenmund, herstellen lassen.

Dadurch, daß der erste Abschnitt in seiner axialen und radialen Ausdehnung so dimensioniert ist, daß aus diesem der Paßkörper und ein Halte- oder Stützkörper, auf den der Paßkörper nach Bearbeitung seiner äußeren Kontur und einer der Stützkörperkontur entsprechenden inneren Kontur aufsetzbar ist, herausgearbeitet werden können, ist es möglich, einen Teil des Abschnittes gleichsam zur Halterung des Paßkörpers nach dessen Fertigstellung zu verwenden, um sodann die Oberfläche des fertigen Paßkörpers noch innerhalb der Bearbeitungsmaschine nachbearbeiten, insbesondere nachpolieren, zu können. Wesentliche Vorteile des erfindungsgemäß vorgeschlagenenen Rohlingskörpers und dessen Verwendung liegen also darin, daß der Paßkörper in der Bearbeitungsmaschine komplett, einschließlich seiner Oberflächenbearbeitung und optischen Anpassung an die übrigen Zähne des Patienten, erstellt werden kann, wodurch insbesondere eine weitere Arbeitseinsparung bei der Erstellung von komplizierten Paßformen, wie Kronen, erzielt wird.

Vorteilhafterweise weist der Rohlingkörper im ersten Abschnitt eine senkrecht zur Einspannachse verlaufende Ausnehmung auf, deren Symmetrieachse die Einschubachse des zu erstellenden Paßkörpers bildet. Die Ausnehmung ist weiterhin in einem bestimmten Abstand zu dem die Halterung bestimmenden Abschnitt angeordnet. Die Ausnehmung kann eine Bohrung sein, die später zu einer konischen Ausnehmung ausgearbeitet wird, wobei die konische Ausnehmung in ihrer Kontur dem Zahnstumpf entspricht, auf den der Paßkörper später aufgesetzt wird. Diese Zahnstumpfform wird während oder nach der Bearbeitung des Paßkörpers, vorzugsweise in der Endphase der Erstellung des Paßkörpers, unmittelbar neben diesem und gleichachsig zur Einspannachse erstellt, so daß nach endgültiger Fertigstellung des Paßkörpers dieser mit der Ausnehmung über die Zahnstumpfform gestülpt und gegebenenfalls mittels einer später wieder lösbaren Klebe- oder Haftverbindung dort kurzzeitig befestigt werden kann. Aufwendige Paßkörper, wie z.B. Kronen, mit relativ dünnwandigen Bodenteilen bzw. Bohrungskanten, wo die Gefahr von Ausbrüchen besteht, können so problemlos nachbearbeitet, insbesondere poliert werden.

Um insbesondere im Bereich des Zahnhalses des Paßkörpers relativ dünnwandige Verläufe vorsehen zu können, ist es vorteilhaft, bei der Herstellung des Rohlingkörpers an derjenigen Stelle des ersten Abschnittes, an der sich die Ausnehmung befinden soll, eine Hülse aus leicht bearbeitbarem Material, z.B. eine Metallhülse, als Abstützung vorzusehen, aus der dann die konische Ausnehmung entsprechend dem Zahnstumpf ausgearbeitet wird.

Für den Rohlingkörper kann mit Vorteil das in der Dentaltechnik heute üblicherweise verwendete Keramik- oder Porzellan-Material verwendet werden. In diesem Zusammenhang wird vorgeschlagen, den Rohlingkörper bei der Herstellung bereits einen bestimmten, dem natürlichen Zahn entsprechenden Farbverlauf von okklusal nach zervikal zu geben. Dies kann in der Weise geschehen, daß der Rohlingkörper, entsprechend dem gewünschten Farbverlauf, aus mehreren Schichten, von glasartig durchscheinend im okklusalen Bereich bis gelblich opak im zervikalen Bereich, hergestellt wird. Alternativ hierzu wird vorgeschlagen, das Material zur Herstellung des Rohlingkörpers mit einem Pigment zu versehen, welches durch Einwirkung von Licht und/oder Wärme aktiviert wird, wodurch der gewünschte Farbverlauf während oder nach der Herstellung des Paßkörpers vorgesehen werden kann. Eine Bestrahlung z.B. mit UV-Licht kann zweckmäßigerweise am Ende der Bearbeitungsphase und noch innerhalb der Bearbeitungsmaschine erfolgen.

Es wird darauf hingewiesen, daß die vorgeschlagenen Maßnahmen zur Berücksichtigung des Farbverlaufs nicht auf die Anwendung des hier vorgestellten Rohlingkörpers beschränkt sind, vielmehr mit Vorteil auch für anders ausgebildete Rohlingkörper anwendbar sind. Weitere Vorteile ergeben sich aus der nachfolgenden Beschreibung eines Ausführungsbeispieles der Erfindung.

Es zeigen:
Figur 1 eine komplette Bearbeitungsmaschine mit dem erfindungsgemäßen Rohlingkörper in einer schaubildlichen Darstellung,
Figur 2 den Rohlingkörper in einer Seitenansicht,
Figur 3 den Rohlingkörper nach Figur 2 teilweise im Schnitt entlang der Linie III-III in Figur 2,
Figur 4 den Rohlingkörper nach Figur 3 mit konisch aufgearbeiteter Ausnehmung,
Figur 5 den Rohlingkörper mit fertig bearbeitetem Paßkörper und dazu passenden Stützkörper,
Figur 6 den Rohlingkörper mit auf dem Stützkörper aufgesetztem Paßkörper,
Figur 7 eine Alternativlösung zur Gestaltung der Ausnehmung.

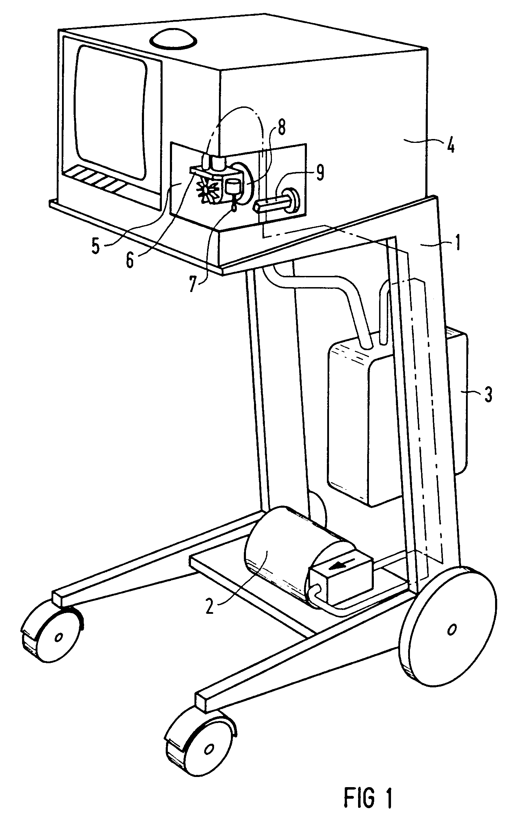

Die Bearbeitungsmaschine nach Figur 1 enthält ein Fahrstativ 1, auf dem eine Flüssigkeitspumpe 2 sowie ein Wassertank 3 montiert sind. Das Stativ trägt weiterhin ein Gehäuse 4, in dem eine Bearbeitungskammer 5 vorgesehen ist, in die einerseits ein Träger 6 für zwei Bearbeitungswerkzeuge 7, 8 sowie ein Rohlingkörper 9 hineinragen. Am Werkzeugträger 6 ist ein Flüssigkeitsantrieb in Form einer Wasserturbine angeordnet, mittels welcher die beiden Werkzeuge 7 und 8, die einerseits ein Fingerfräser und andererseits ein scheibenförmiges Schleifblatt sind, angetrieben werden. Die Steuerung der Antriebe erfolgt über eine ebenfalls im Gehäuse angeordnete Elektronik, welche Drehzahlvorschub der Werkzeuge nach einem bestimmten Bearbeitungsprogramm, welches vom Benutzer anhand der Präparation erstellt werden muß, abläuft. Nach diesem Bearbeitungsprogramm wird aus dem mit 9 bezeichneten Rohlingkörper ein Paßkörper hergestellt, der in den zuvor präparierten Zahn eines Patienten einzementiert wird. Weitere Details über Aufbau und Wirkungsweise einer solchen Bearbeitungsmaschine sind beispielsweise der EP-0 182 098 zu entnehmen.

Anhand der nachfolgenden Figuren wird der Rohlingkörper 9 näher beschrieben. Der Rohlingkörper 9 ist in zwei Abschnitte 9a, 9b unterteilt; der erste Abschnitt (9a) besteht aus einem länglichen, im Querschnitt rechteckigen (oder kreisförmigen) Block aus Zahnrestaurationsmaterial, vorzugsweise aus Dental Keramik oder Dental-Porzellan. Der zweite Abschnitt (9b) kann im Prinzip aus dem gleichen Material bestehen; aus Kostengründen wird man jedoch diesen, da er ausschließlich zur Halterung des Rohlingkörpers in der Bearbeitungsmaschine dient, aus Metall fertigen. In diesem Falle sind die beiden Teile 9a, 9b fest miteinander verklebt. Der als Halter dienende Abschnitt 9b weist einen Längsschlitz 10 auf, der erste Referenzflächen bzw. Anschlagflächen bildet, mit deren Hilfe der Rohling sich in einer eindeutigen Lage in der Bearbeitungsmaschine zentrieren und einspannen läßt. Eine weitere Referenzfläche 10a dient dazu, die Lage und den Ansetzpunkt des Bearbeitungswerkzeuges zu bestimmen, indem die Referenzfläche jeweils vom Bearbeitungs-'touchiert' bzw. angefahren wird.

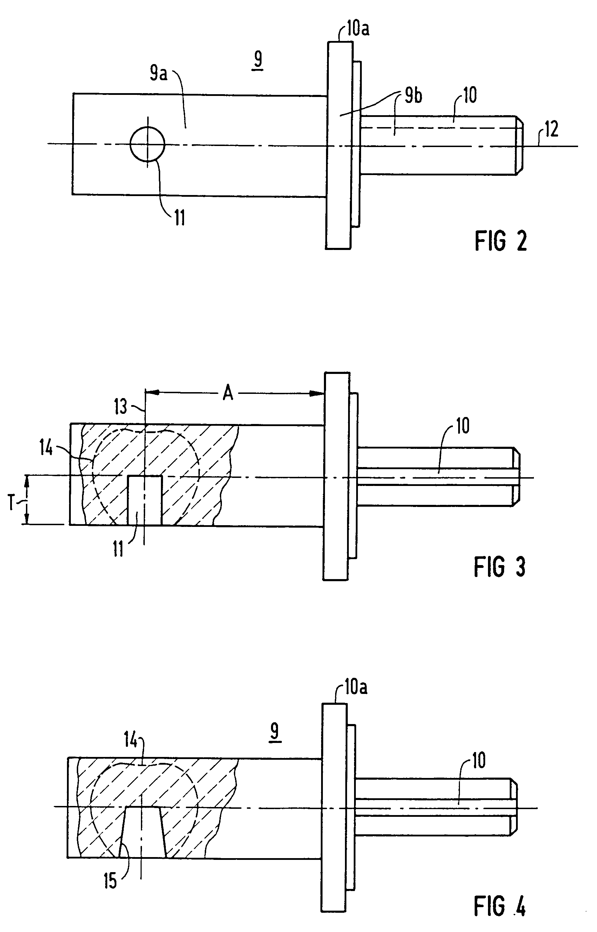

Der erste Abschnitt 9a, der zur materialabtragenden Bearbeitung des Paßkörpers dient, enthält eine Ausnehmung in Form einer Bohrung 11, die quer zu der mit 12 bezeichneten Einspannachse verläuft. Die Bohrung 11, deren zugeordnete Symmetrieachse 13 - die gleichzeitig Einschubachse des mit 14 bezeichneten und in Figur 3 und 4 gestrichelt eingezeichneten fertigen Paßkörpers ist - verläuft so weit radial nach innen (Tiefenmaß T), soweit es für die spätere Halterung des fertigen Paßkörpers 14, im vorliegenden Falle eine Krone, erforderlich ist. Die zunächst zylindrische Bohrung 11 kann mittels des Bearbeitungswerkzeuges 7 (Fig. 1) auf die in Figur 4 dargestellte konische, dem späteren Zahnstumpf entsprechende Paßform 15 aufgearbeitet werden.

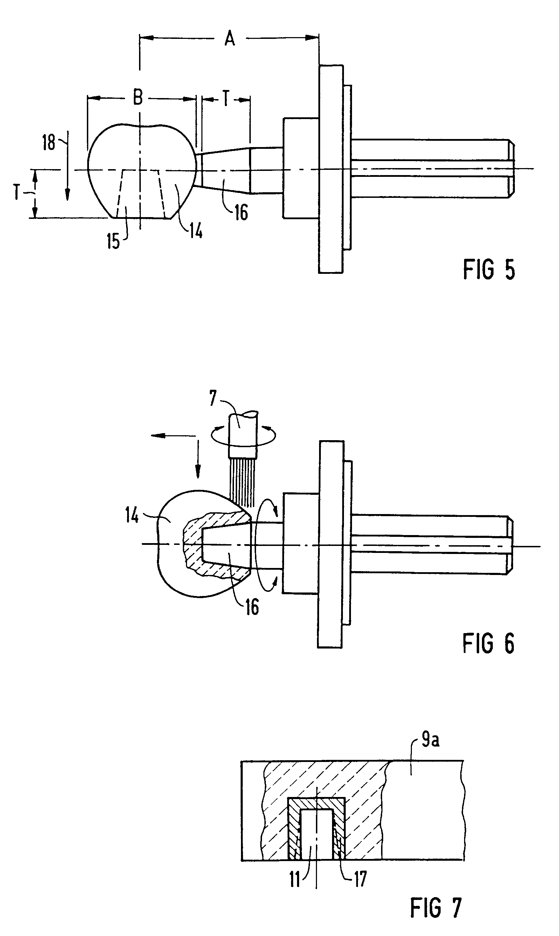

Die Bohrung 11 ist in einem Abstand A zum zweiten Abschnitt 9b angeordnet. Dieser Abschnitt ist so bemessen, daß er zumindest gleich oder größer ist der Summe der halben Breite B des fertigen Paßkörpers und der Tiefe (T) der Ausnehmung. Der Grund für diese Abstandsbemessung liegt darin, daß in der Bearbeitungsphase, vorzugsweise in der Endphase der Erstellung des Paßkörpers, das unmittelbar neben dem Paßkörper befindliche Material auf die gleiche (positiv) Form gebracht wird wie die (negativ) Form 15 der Ausnehmung 11 im Paßkörper. Der neben dem Paßkörper verbleibende Abschnitt wird demnach zu einem der Kontur 15 der Ausnehmung entsprechenden Stumpf 16 ausgearbeitet, der dann als Halte- und Stützkörper für den Paßkörper dient, indem nach dem Abstechen des Paßkörpers dieser mit der Ausnehmung 15 aufgesetzt wird, wie dies in Figur 6 dargestellt ist. Mit dem Werkzeug 7, bei dem anstelle des in Figur 1 gezeichneten Fingerfräsers eine Polierbürste oder dergleichen eingesetzt ist, kann nun die Oberfläche des Paßkörpers noch in der Bearbeitungsmaschine nachbearbeitet, insbesondere nachpoliert werden.

Nachdem Keramik und Prozellan relativ harte Materialien sind, und insbesondere bei dünnwandigen Konfigurationen, wie z.B. im Bereich des Zahnhalses, leicht die Gefahr besteht, daß während der Bearbeitung Paßkörperteile ausbrechen, ist es vorteilhaft, zur Abstützung in den Rohling des vorgesehenen Rohlingkörpers eine mit der Bohrung 11 versehene Metallhülse 17 einzusetzen, die dann, wie zuvor geschildert, auf die entsprechende konische Form aufgearbeitet wird (Figur 7).

Die Ausnehmung bzw. Bohrung 11 kann in Zusammenwirken mit den Referenzflächen 10a und/oder anderen geeigneten Referenzflächen vom Werkzeug gefunden werden.

Wie bereits erwähnt, enthält das Material für den Abschnitt 9a vorteilhafterweise eine licht- und/oder wärmeempfindliche Substanz, wodurch durch Bestrahlung die Transluzenz und Farbe des Paßkörpers individuell gestaltet werden kann. Der Farb- und Transluzenzverlauf ist von okklusal nach zervikal in Figur 5 durch den Pfeil 18 angedeutet.

## Patentansprüche

1. Rohlingkörper zur Herstellung eines Zahnrestaurations-Paßkörpers, insbesondere einer Krone, mit einem ersten Abschnitt (9) zur materialabtragenden Bearbeitung des Paßkörpers (14) und einem zweiten Abschnitt (9a) zur Halterung des Rohlings in einer Bearbeitungsmaschine (4), **dadurch gekennzeichnet,** daß der erste Abschnitt (9a) in seiner axialen und radialen Ausdehnung so dimensioniert ist, daß aus diesem der Paßkörper (14) und ein Halte- oder Stützkörper (16), auf den der Paßkörper nach Bearbeitung seiner äußeren Kontur und einer der Stützkörperkontur entsprechenden inneren Kontur (15) aufsetzbar ist, herausgearbeitet werden können.

2. Rohlingkörper nach Anspruch 1, **dadurch gekennzeichnet,** daß an derjenigen Stelle des ersten Abschnittes (9a), an der der Paßkörper (14) herausgearbeitet wird, eine senkrecht zur Einspannachse (12) verlaufende Ausnehmung (11) vorgesehen ist, deren Symmetrieachse (13) die Einschubachse des zu erstellenden Paßkörpers (14) bildet, und daß die Ausnehmung (11) in einem Abstand (A) zum zweiten Abschnitt (9b) angeordnet ist, der so bemessen ist, daß er zumindest der halben Breite (B) des Paßkörpers (14) plus der Tiefe (T) der Ausnehmung (11) entspricht.

3. Rohlingkörper nach Anspruch 1, **dadurch gekennzeichnet,** daß die Ausnehmung (11) eine Bohrung ist, die im Verlauf der Bearbeitung zu einer konischen Ausnehmung aufgearbeitet wird, welche in ihrer Kontur dem Zahnstumpf entspricht, auf den der Paßkörper (14) aufsetzbar ist.

4. Rohlingkörper nach Anspruch 3, **dadurch gekennzeichnet,** daß die Bohrung (11) in einer Hülse (17) enthalten ist, welche im Rohlingkörper eingesetzt ist.

5. Rohlingkörper, insbesondere nach einem der Ansprüche 1 bis 4, **dadurch gekennzeichnet,** daß zumindest der erste Abschnitt (9a) Komponenten oder Schichten enthält, wodurch der Paßkörper (14) einen unterschiedlichen Farbverlauf von okklusal nach zervikal erhält.

6. Rohlingkörper nach Anspruch 5, **dadurch gekennzeichnet,** daß das Ausgangsmaterial für den Rohlingkörper Pigmente enthält, welche bei Einwirkung von Strahlung, vorzugsweise Wärme und/oder Licht, die Farbe und/oder Transluzenz des Materials ändern.

7. Verwendung des Rohlingkörpers nach einem der Ansprüche 1 bis 6, zur Herstellung eines Zahnrestaurations-Paßkörpers, **dadurch gekennzeichnet,** daß der Rohlingkörper mit dem zweiten Abschnitt (9b) in eine Spannvorrichtung einer Bearbeitungsmaschine (6) eingesetzt wird, daß anschließend die Ausnehmung (11) entsprechend der Form des (konisch) präparierten Zahnstumpfes, auf den der Paßkörper aufsetzbar ist, ausgearbeitet wird, daß in der Bearbeitungsphase, vorzugsweise in der Endphase der Erstellung der äußeren Kontur des Paßkörpers (14) aus demselben Abschnitt und unmittelbar angrenzend an den Paßkörper (14) ein dem Zahnstumpf entsprechender Halte- und Stützkörper (16) erstellt wird, dessen Symmetrieachse gleichachsig zur Einspannachse (12) verläuft und daß nach Abstechen des Paßkörpers (14) vom Rohlingkörper der Paßkörper zur Nachbearbeitung seiner äußeren Oberfläche mit der Ausnehmung (11) auf den Stützkörper (16) aufgesetzt und gegebenenfalls unter Zuhilfenahme von wieder lösbaren Haftmitteln dort befestigt wird.

## Claims

1. Blank body for the manufacture of a tooth-repair fitting body, in particular a crown, having a first section (9) for the material-removing working of the fitting body (14) and a second section (9a) for supporting the blank in a working machine (4), characterized in that the first section (9a) is dimensioned in its axial and radial extent such that from this there can be worked the fitting body (14) and a holding or supporting body (16), on to which the fitting body can be attached after the working of its outer contour and an inner contour (15) corresponding to the support-body contour.

2. Blank body according to claim 1, characterized in that at that position of the first section (9a) at which the fitting body (14) is worked out, a recess (11) extending perpendicular to the clamping axis (12) is provided, the axis of symmetry (13) of which forms the insert axis of the fitting body (14) to be constructed, and in that the recess (11) is arranged with clearance (A) from the second section (9b), which is dimensioned such that it corresponds to at least half the width (B) of the fitting body (14) plus the depth (T) of the recess (11).

3. Blank body according to claim 1, characterized in that the recess (11) is a bore which is worked in the course of the working into a conical recess, the contour of which corresponds to the tooth stump on to which the fitting body (14) can be attached.

4. Blank body according to claim 3, characterized in that the bore (11) is contained in a sleeve (17) which is inserted in the blank body.

5. Blank body, in particular according to one of claims 1 to 4, characterized in that at least the first section (9a) comprises components or layers, by means of which the fitting body (14) attains a varying colour characteristic from the occlusal surface to the neck.

6. Blank body according to claim 5, characterized in that the starting material for the blank body contains pigments which, with the action of radiation, preferably heat and/or light, change the colour and/or translucency of the material.

7. Use of the blank body according to one of claims 1 to 6, for the manufacture of a tooth-repair fitting body, characterized in that the blank body with the second section (9b) is inserted into a clamping device of a working machine (6), in that subsequently the recess (11) is worked out corresponding to the form of the (conically) prepared tooth stump, on to which the fitting body can be attached, in that in the working phase, preferably in the final phase of the construction of the outer contour of the fitting body (14) from the same section and directly adjoining the fitting body (14), a holding and supporting body (16) corresponding to the tooth stump is constructed, the symmetry axis of which extends coaxially to the clamping axis (12) and in that after cutting the fitting body (14) off from the blank body the fitting body is attached with the recess (11) to the support body (16) for the finishing of its outer surface and is fastened there, perhaps with the aid of releasable fixing means.

## Revendications

1. Ébauche destinée à la fabrication d'une prothèse dentaire, notamment d'une couronne, comportant une première partie (9) destinée à l'usinage, avec enlèvement de matière, de la prothèse dentaire et une seconde partie (9a) destinée à retenir l'ébauche dans une machine d'usinage (4), caractérisée par le fait que la première partie (9a) à des dimensions axiales et radiales telles qu'à partir de cette partie, on peut dégager par usinage la prothèse (14) et une pièce de maintien ou d'appui (16), sur laquelle on peut mettre la prothèse après usinage de son contour extérieur et d'un contour intérieur (15) qui correspond au contour de la pièce d'appui.

2. Ébauche suivant la revendication 1, caractérisée par le fait qu'à l'emplacement de la première partie (9a), où la prothèse (14) est dégagée, il est prévu une ouverture (11) qui est perpendiculaire à l'axe de blocage (12) et dont l'axe de symétrie (13) forme l'axe d'insertion de la prothèse (14) à former, et que l'évidement (11) est à une distance (A) de la seconde partie (9b), telle qu'elle correspond au moins à la moitié de la largeur (B) de la prothèse (14) plus la profondeur (T) de l'évidement (11).

3. Ébauche suivant la revendication 1, caractérisée par le fait que l'évidement (11) est un trou, qui est réalisé lors de l'usinage sous la forme d'un évidement conique et dont le contour correspond au chicot, sur lequel la prothèse (14) doit être montée.

4. Ébauche suivant la revendication 3, caractérisée par le fait que le trou (11) est contenu dans une douille (17), qui est insérée dans l'ébauche.

5. Ébauche, notamment suivant l'une des revendications 1 à 4, caractérisée par le fait qu'au moins la première partie (9a) contient des constituants ou des couches, ce qui donne à la prothèse (14) une coloration différente du côté occlusal au côté cervical.

6. Ébauche suivant la revendication 5, caractérisée par le fait que la matière première de l'ébauche contient des pigments, qui, sous l'action d'un rayonnement, de préférence de la chaleur et/ou de la lumière, changent la couleur et/ou la transparence de la matière.

7. Utilisation de l'ébauche suivant l'une des revendications 1 à 6, pour la fabrication d'une prothèse dentaire, caractérisée par le fait qu'on monte l'ébauche, par sa seconde partie (9b) dans un dispositif de blocage d'une machine d'usinage (6), qu'ensuite on ménage l'évidement (11) en lui donnant une forme correspondant à la forme du chicot préparé (conique), sur lequel peut être mise l'ébauche, que dans la phase d'usinage, de préférence dans la phase finale de formation du contour extérieur de l'ébauche (14), on forme à partir de la même partie et dans une position directement contiguë à la prothèse (14), une pièce d'appui et de support (16), qui correspond au chicot et dont l'axe de symétrie est le même que l'axe de blocage (12), et qu'après avoir séparé la prothèse (14) de l'ébauche, on met la prothèse par l'évidement (11) sur la pièce d'appui (16), pour l'usinage de finition de sa surface extérieure et on l'y fixe éventuellement à l'aide d'agents adhésifs pouvant être enlevés à nouveau.
